# EUROPEAN PATENT APPLICATION

(11) **EP 2 042 967 A1**
(43) Date of publication of application: **01.04.2009**
(21) Application number: 08014350.6
(22) Date of filing: 12.08.2008
(51) Int. Cl.: G06F 1/16, G06F 3/033

(54) **Sensing Module**

(30) Priority: 28.09.2007 TW 96136434
(71) Applicant: BenQ Corporation, Nei Hu Taipei Taiwan (TW)
(72) Inventor: Chao, Chia-Chen, Taipei 114 (TW); Yuan, Ming-Chih, Taiyuan County 320, (TW); Chen, Wen-Kang, Taipei 112 (TW)
(74) Representative: Brandenburger, Karin

(57) **Abstract**

A sensing module for an electronic device is provided. The sensing module comprises a sensor, a starter and a calculator. The sensor senses the acceleration of the electronic device and generates an acceleration signal. The starter generates a trigger signal. The calculator receives the acceleration signal and the trigger signal simultaneously and determines whether the electronic device is turning or not. The calculator generates a switching signal while the electronic device is turning. The switching signal induces the electronic device from a first operation switching to a second operation. The electronic device includes a body and a screen, and the first operation is displayed more obviously.

## Description

### BACKGROUND OF THE INVENTION

### 1. Field of the Invention

The present invention relates generally to a sensing module. Particularly, the present invention relates to a sensing module for an electronic device.

### 2. Description of the Prior Art

Besides the augment of the aesthetic and function, the convenience and accessibility for users play an important role on users' purchase.

As the function of the electronic device increases, users can simultaneously operate several programs on the electronic device or browse several profiles. If users want to switch the program to other programs or switch the profile to other profile, users require the input component as an interface. For example, the input component can be a button, a starter, a panel, a mouse, a touch pad, a stick, a touch panel and so on. In order to save the space of the electronic device, such device usually utilizes buttons, starter and touch panel.

Buttons and starter are deemed to select from a menu. If users want to switch the program to other programs or switch the profile to other profile, users always need to push at least a button or starter. The defect of the touch panel is requiring users to touch the special location. Those techniques described above still need for improvement.

### SUMMARY OF THE INVENTION

It is an object of the present invention to provide a sensing module of an electronic device for improving the accessibility of the electronic device.

It is another object of the present invention to provide an electronic device having a better accessibility.

It is a further object of the present invention to provide an electronic device operating method for improving the accessibility of the electronic device.

The sensing module of the present invention is disposed in the electronic device. An electronic device comprises a body and a screen. The body has an executing first operation and a standby second operation. The screen is disposed on the body, wherein the first operation is exhibited as a more obvious display on the screen, the second operation is exhibited as a more obscure display on the screen.

A sensing module comprises a sensor, a starter and a calculator. The sensor is disposed on the body for sensing the acceleration of a moving state of the electronic device to generate as acceleration signal. The starter is disposed on the body for generating a trigger signal. The calculator is disposed on the body and is capable of receiving the acceleration signal ant the trigger signal and determining whether the electronic device is turning or not according to the trigger signal and the acceleration signal.

The sensor includes a acceleration sensing chip capable of sensing an acceleration of a first direction, an acceleration of a second direction, and an acceleration of a third direction, the accelerations of these directions are perpendicular to each other. The sensor includes a first acceleration sensor of the first direction, a second acceleration sensor of the second direction and a third acceleration sensor of the third direction, the first direction, the second direction and the third direction are perpendicular to each other.

The calculator determines the moving state of the electronic device is turning when a difference between the acceleration of the first direction and the acceleration of the third direction is larger than a first value. The calculator determines the moving state of the electronic device is turning when a difference between the acceleration of the second direction and the acceleration of the third direction is larger than a second value.

The starter is a thermo-sensing starter. The starter is an inductance starter. While the movement of the electronic device is turning, the calculator generates a switching signal. The switching signal induces the electronic device from a first operation switching to a second operation, wherein the second operation is exhibited as the more obvious display on the screen. The more obvious display corresponding to the more obscure display can be displayed on the screen with upper layer to users, with anterior arrangement to users, with greater brightness to users, with larger size to users. The starter is a button starter.

An electronic device operating method includes providing a trigger signal generated by a starter, generating an acceleration signal by a sensor of sensing an acceleration of a moving state of the electronic device, providing a calculator to receive the acceleration signal and the trigger signal, determining whether the electronic device is turning or not according to the trigger signal and the acceleration signal, generating a switching signal by the calculator when the moving state of the electronic device is turning and inducing the electronic device form a first operation switching to a second operation according to the switching signal, and exhibiting the second operation as a more obvious display on a screen.

### BRIEF DESCRIPTION OF THE DRAWINGS

Fig. 1 a is a schematic diagram of the preferred embodiment of the present invention.

Fig. 1b to 1d is a schematic diagram of the present invention having different more obvious displays.

Fig. 2a is a schematic diagram of overlooking the present invention.

Fig. 2b is a schematic diagram of different embodiments of the starter.

Fig. 3a is a schematic diagram of overlooking the preferred embodiment of the present invention.

Fig. 3b is a schematic diagram of preferred embodiment of the present invention.

Fig. 3c is another schematic diagram of overlooking the present invention.

Fig. 4a is another schematic diagram of the present invention.

Fig. 4b is lateral view diagram of another embodiment of the present invention.

Fig. 5a to 5d is a schematic diagram of the embodiments of the present invention.

Fig. 6 is a schematic diagram of the circuit of the electronic device of the present invention.

Fig. 7 is the electronic device operating method figure.

### DETAILED DESCRIPTION OF THE PREFERRED EMBODIMENT

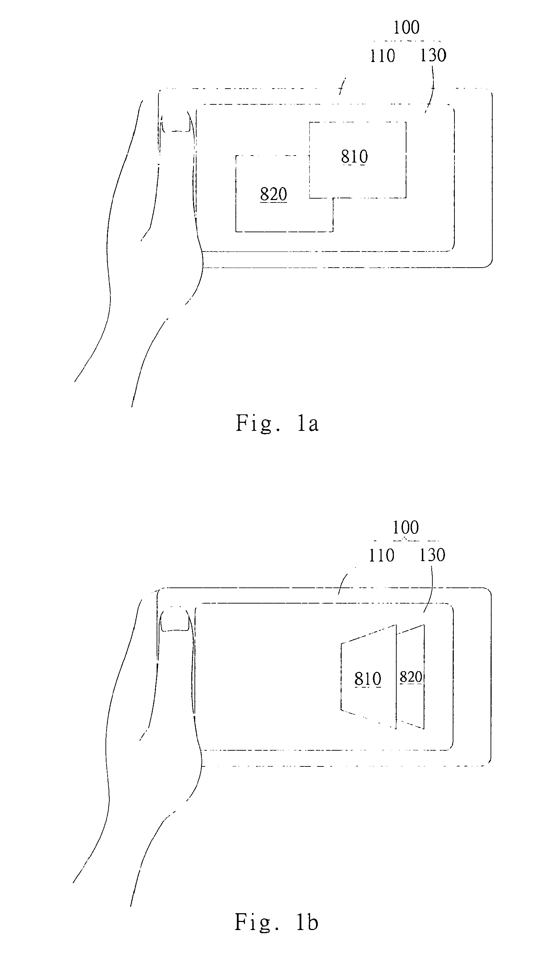

The present invention provides a sensing module disposed on the electronic device. In the preferred embodiment shown in Fig. 1a, the electronic device 100 is a Mobile Internet Device (MID). However in other embodiments, the electronic device 100 can be a Personal Digital Assistant (PDA), a cell phone, an eBook, a digital picture frame, a digital camera, a digital walkman, an electronic dictionary, a Global Position System Navigator (GPS Navigator) and so on.

In the preferred embodiment shown in Fig. 1a, the Mobile Internet Device of the electronic device 100 includes a body 110 and a screen 130. The body 110 has the executing first operation 810 and the standby second operation. The screen 130 is disposed on the electronic device 110, wherein the first operation is exhibited as more obvious display on the screen, the second operation is exhibited as a more obscure display on the screen.

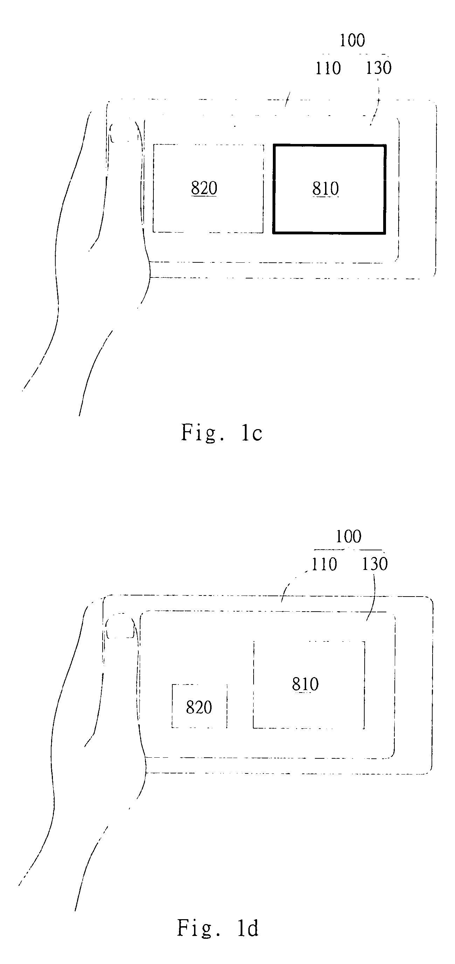

In the preferred embodiment shown in Fig. 1a, the more obvious display is displayed on the screen with upper layer to users corresponding to the more obscure display on the screen. However, in other embodiments, the more obvious display is displayed on the screen with different visual effects corresponding to the more obscure display. In the embodiment shown in Fig. 1b, the more obvious display is displayed on the screen with anterior arrangement to users corresponding to the more obscure display. In the embodiment shown in Fig. 1c, the more obvious display is displayed on the screen with greater brightness to users corresponding to the more obscure display. In the embodiment shown in Fig. 1d, the more obvious display is displayed on the screen with larger size to users corresponding to the more obscure display.

In the preferred embodiment, the first operation 810 and the second operation 820 are executed by different window operating system of the processor of the body 110. These window operating systems described above can be the window operating systems of different software. Besides, these window operating systems can be the window operating systems of the same software but within different profiles. However, in other embodiments, the first operation 810 and the second operation 820 can be different profiles opened in the electronic device 100 such as different digital pages in the eBook, different music in the digital walkman, different digital picture in the digital picture frame.

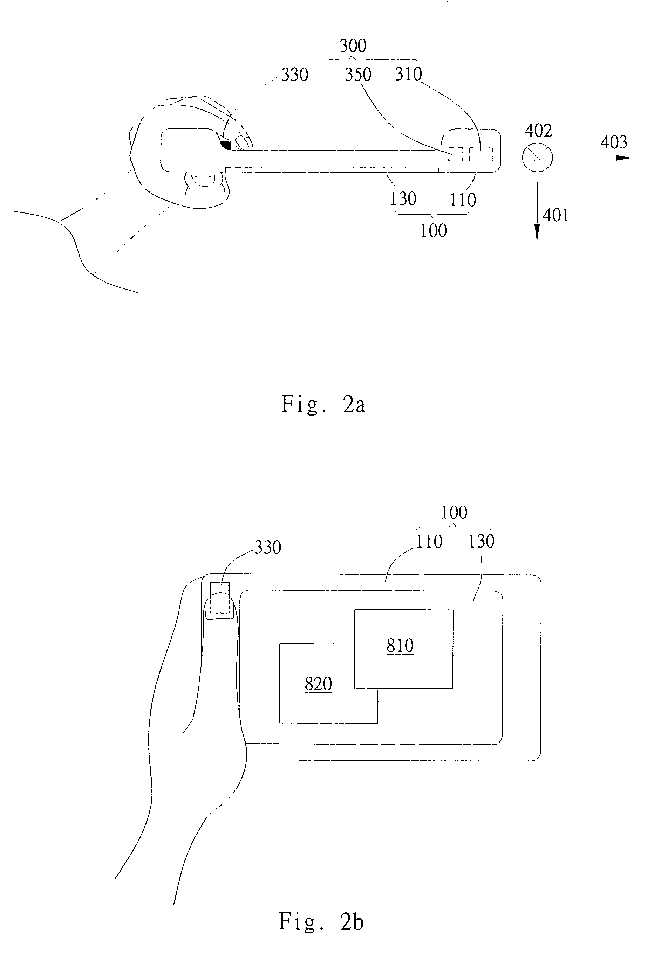

In the preferred embodiment shown in Fig. 2a, the sensing module 300 includes a sensor 310, a starter 330 and a calculator 350. The starter 330 is disposed on the body 110 and generates a trigger signal. In the preferred embodiment shown in Fig. 2a, the starter 330 is disposed on the lateral side of the electronic device 110 corresponding to the screen 130. The position of the starter 330 is corresponding to the users' fingers of the electronic device 100. It means that when users hold the electronic device 100, the users' fingers is corresponding to the users' fingers in order to increase the accessibility toward the starter 330. In the other embodiments, the starter 330 can be disposed on different positions on the body 110 according to different demand. In the embodiment shown in Fig. 2b, the starter 330 and the screen 130 are disposed on the same side of the body 110.

In the preferred embodiment shown in Fig. 2a, the starter 330 can be a button starter which is activated by a button. However, in other embodiments, the starter 330 can be a pressure sensing starter through sensing the pressure to activate, a thermo-sensing starter through sensing the temperature change to activate, a inductance through sensing the current or voltage change to activate. Besides, in other embodiments, the starter 330 further includes the function capable of recognizing the fingerprint.

In the preferred embodiment shown in Fig. 2a, the calculator 350 is disposed on the body 110 for receiving the acceleration signal and trigger signal and determining whether the electronic device 100 is turning or not according to the trigger signal and the acceleration signal. In the preferred embodiment, the calculator 350 is executed in the processor of the electronic device 100. However, in other embodiments, the calculator 350 can be executed on the isolated processor; the results from the calculator 350 will transfer to the processor of the electronic device 100 for further processing.

The sensor 310 is disposed on the body 110 for sensing the acceleration of moving state of the electronic device 100 in order to generate the acceleration signal. In the preferred embodiment, the sensor 310 is disposed on inside of the body 110, wherein the starter 330 corresponding to another side whose side is far from the position of user' hand. By doing so, it can sense more obvious acceleration. However, in other embodiments, the sensor 310 is disposed on different position of the body 110 according to different demand.

In the preferred embodiment shown in Fig. 2a, the sensor 310 can be a acceleration sensing chip for sensing an acceleration of a first direction 401, an acceleration of a second direction 402, and an acceleration of a third direction 403, wherein the acceleration of these directions are perpendicular to each other. The sensing rationale of the acceleration sensing chip includes utilizing difference of capacitor of the sensing component when the sensing component accelerates. However, in other embodiments, the sensor 310 includes a first acceleration sensor of the first direction 401, a second acceleration sensor of the second direction 402 and a third acceleration sensor of the third direction 403, the first direction 401, the second direction 402 and the third direction 403 are perpendicular to each other.

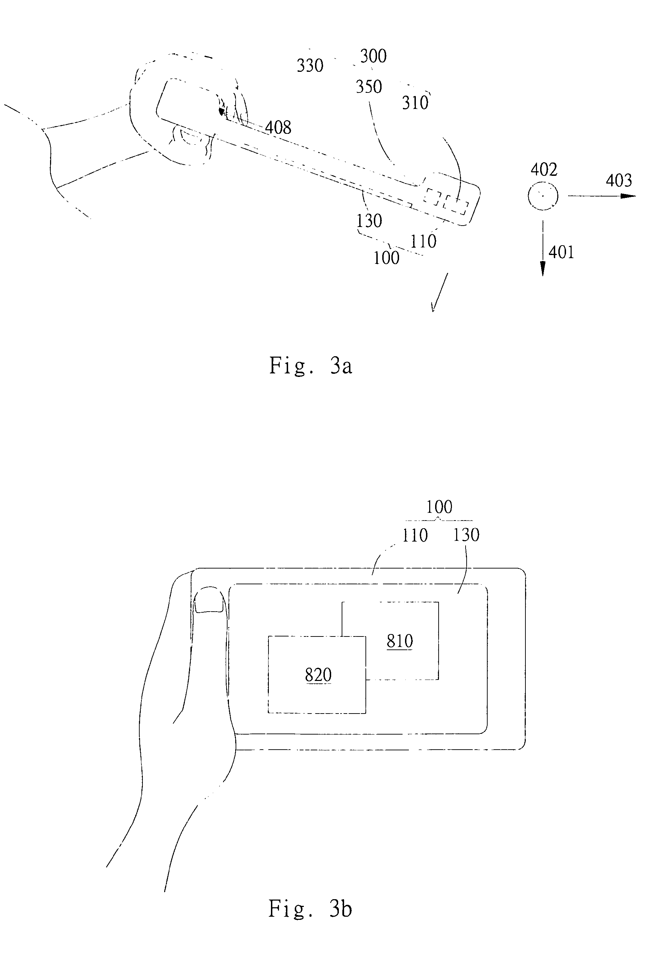

The sensing module 300 of the present invention and the electronic device 100 cooperates for using. In the preferred embodiment shown in Fig. 3a, the acceleration sensing chip as the sensor 310 can sense the acceleration of first direction 401, the acceleration of second direction 402 and the acceleration of third direction 403, wherein those directions are perpendicular to each other and generate the acceleration signal. When user's finger touches the button starter as starter 330 in the button direction 408, the starter 330 generates a trigger signal. The calculator disposed on the body 110 receives or calculates the acceleration signals according to the trigger signal to determine whether the electronic device 100 is turning or not, turning styles, turning directions and turning angles. In the preferred embodiment, the calculator 350 is executed in the processor of the electronic device 100.

In the preferred embodiment shown in Fig. 3a, users make the electronic device 100 clockwise turn around the second direction 402, wherein the electronic device 100 simultaneously generates an acceleration of the first direction 401. Although the electronic device 100 may generate an acceleration of the third direction 403, the calculator 350 determines the moving state of the electronic device 100 is turning when a difference of the acceleration of the first direction 401 the acceleration of the third direction 403 is larger than a first value.

When the movement of the electronic device 100 is turning, the calculator 350 generates a switching signal. In the preferred embodiment shown in Fig. 3b, the switching signal induces the electronic device 100 from the first operation 810 switching to the second operation 820, wherein the second operation 820 is exhibited as the more obvious display on the screen, the first operation 810 switches to be standby. On the other hand, the second operation 820 now is displayed with upper layer to users corresponding to the first operation 810. In the preferred embodiment, when the more obvious display of different operating systems switches to each other, the indicator signal controls the display control software of the processor of the electronic device 100 to process. By doing so, users can switch to different operating systems through simple handy action. Such convenience will increase the accessibility of the mobile internet device (MID).

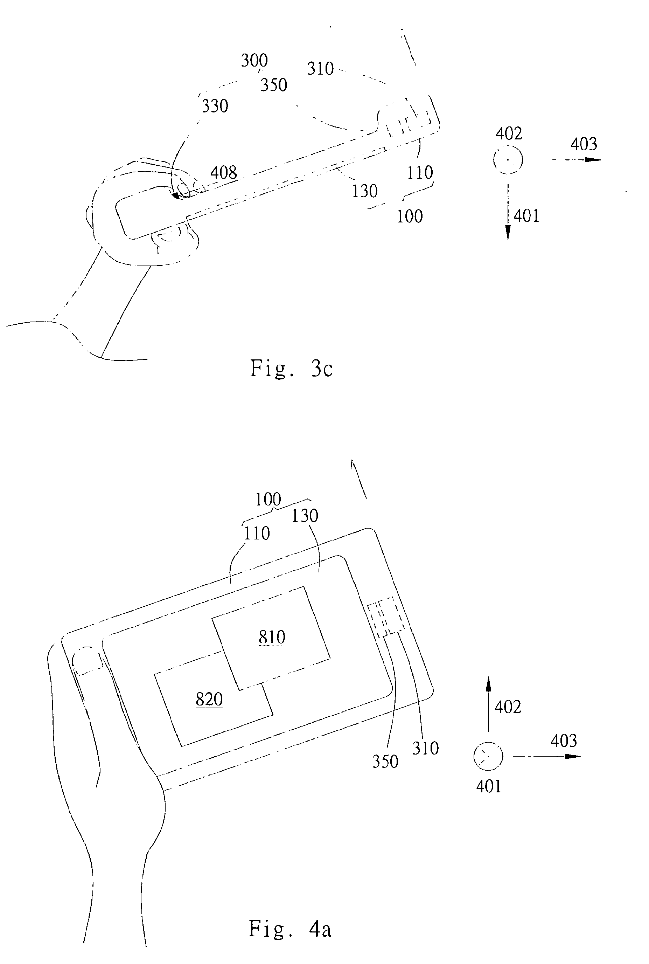

In the preferred embodiment shown in Fig. 3c, users can make the electronic device 100 anti-clockwise turn around in the second direction 402, wherein the electronic device 100 simultaneously generates an acceleration against the first direction 401. When the difference of the acceleration against the first direction 401 and the acceleration of the third direction 403 is larger than the third value, the calculator 350 determines the moving state of the electronic device 100 is a second turning state. When the moving state of the electronic device 100 is the second turning state, the calculator 350 generates a second switching signal, wherein the second switching signal induces the electronic device 100 from the executing second operation 820 switching to the first operation 810, with the reference to Fig. 1a, the first operation 810 is the more obvious display on the screen. In other words, users can make the electronic device 100 generate the switching effect, back and forth between the first operation 810 and the second operation 820, through making the electronic device 100 generate these actions in the same or against action direction.

In other embodiments, users make the electronic device 100 move in different directions to allow the calculator 350 to determine the moving state of the electronic device is turning. In the embodiment shown in Fig. 4a, users make the electronic device 100 anti-clockwise turn around in the first direction 401, wherein the electronic device 100 simultaneously generates the acceleration of the second direction 402. When the difference between the acceleration of the second direction 402 and the acceleration of the third direction 403 is larger than the second value, the calculator 350 will determine the moving state of the electronic device 100 is turning, wherein calculator 350 generates a switching signal to induce the electronic device 100 from executing the first operation 810 switching to the second operation 820, with reference to Fig. 3b, the second operation 820 is displayed on the screen with more obvious display.

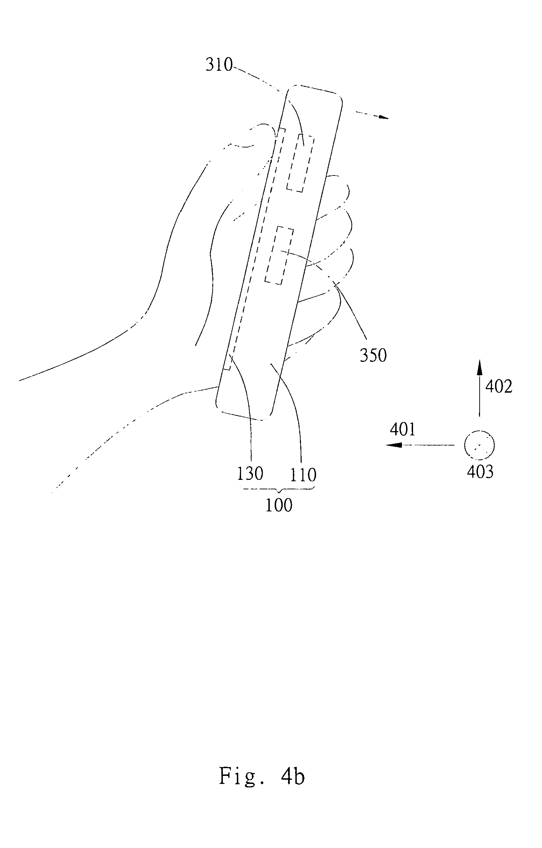

In the lateral view diagram of another embodiment shown in Fig. 4b, users make the electronic device 100 clockwise turn around the third direction 403, wherein the electronic device 100 simultaneously generates an acceleration of the first direction 401. Particularly, the electronic device is based on the base part as axle to turn counter corresponding to the first direction 401. When the difference between the acceleration of the first direction 401 and the acceleration of the third direction 403 is larger than the third value, the calculator 350 determines the moving state of electronic device 100 is turning to generate a switching signal which induces the electronic device 100 from executing the first operation 810 switching to the second operation 820, wherein with the reference to Fig. 3b, the second operation 820 is exhibited as the more obvious display on the screen. With the reference to Fig. 4b, Fig. 4b, the preferred sensor 310 is disposed on the upper inside of the body 110 in order to sense the more obvious acceleration.

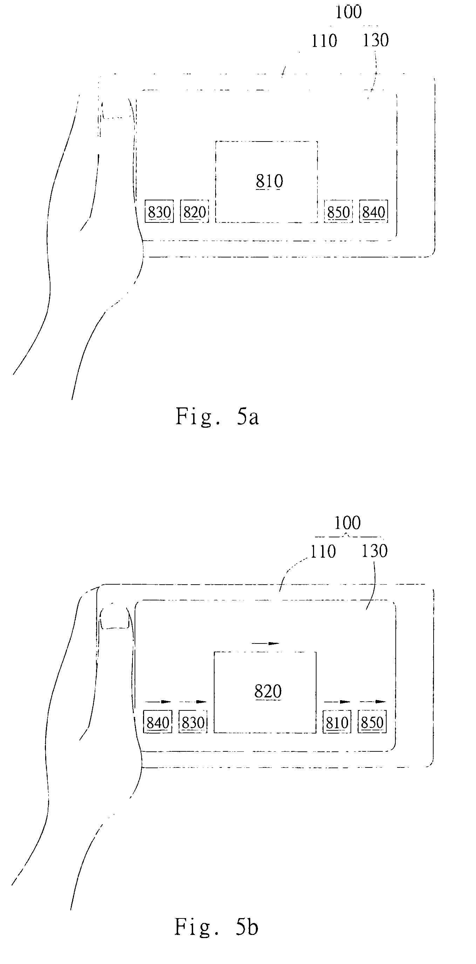

The operating system number of the electronic device 100 is not limited to two. In the embodiment shown in Fig. 5a, the electronic device 100 has executing the first operation 810, the standby second operation 820, the third operation 830, the fourth operation 840 and the fifth operation 850, wherein the first operation 810 is more obvious display. Particularly, the first operation 810 is displayed on the screen with larger size to users corresponding to other operating systems.

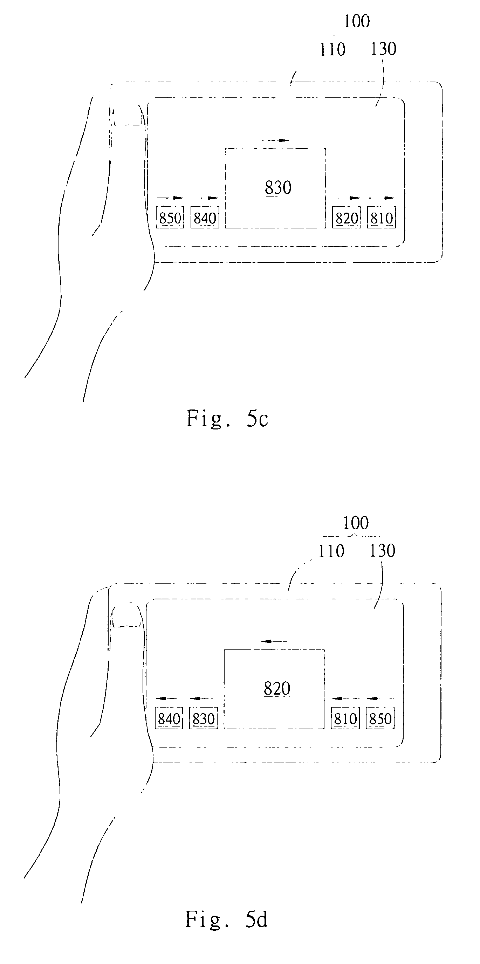

With the reference to Fig. 3a, when users push the starter 330 and make the electronic device 100 clockwise turn around the second direction 402, the electronic device 100 described as Fig. 5b induces the executing first operation 810 switching to the second operation 820. When users make the electronic device 100 generate to clockwise turn around the second direction 402 described as Fig. 3a, the electronic device 100 will induce from executing the second operation 820 switching to the third operation 830 described as Fig. 5c. On the other hand, if users make the electronic device 100 anti-clockwise turn around the second direction 402 described as Fig. 3c, the electronic device 100 induces the executing third operation 830 switching to the second operation 820 described as Fig. 5d. By doing so, users can make simple handy action to quickly switch the different operating system in the electronic device and that is user-friendly.

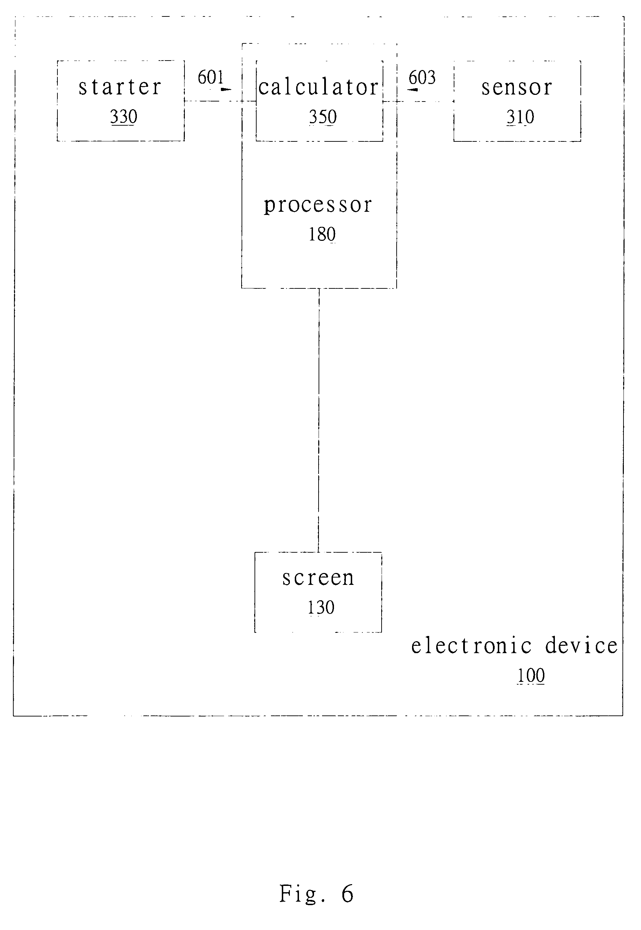

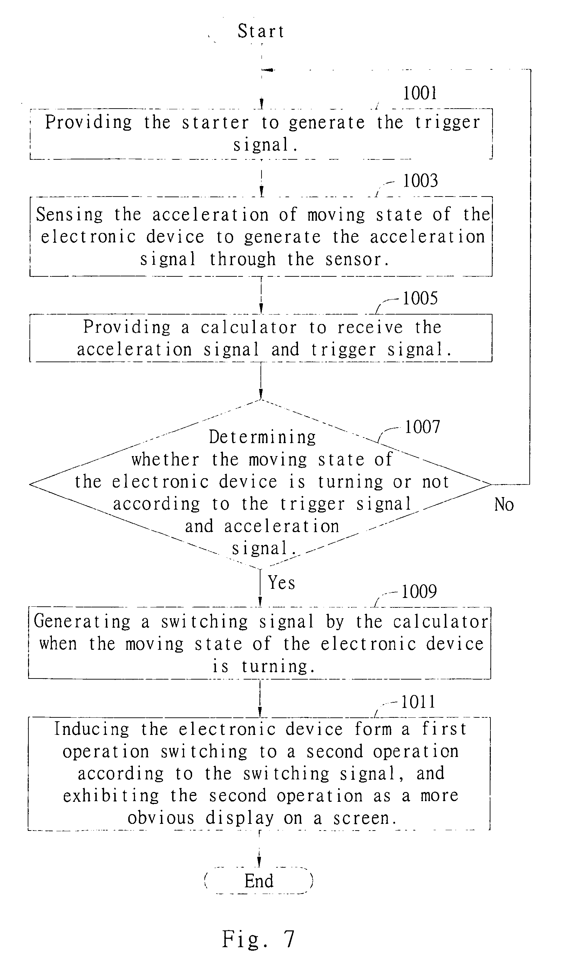

In the present invention shows the circuit structure diagram of the sensing module in Fig. 6. The electronic device operating method in Fig. 7 includes:

Method 1001 shown in Fig. 6 for providing the starter 330 to generate trigger signal 601. With the reference to Fig. 3a, when finger touches the button starter in the button direction 408, the starter 330 generates trigger signal 601.

Method 1003 shown in Fig. 6 for sensing the acceleration of moving state of the electronic device 100 to generate the acceleration signal 603 through the sensor 310. With the reference to Fig. 3a, users make the electronic device 100 generate the more obvious movement in the first direction 401, wherein the electronic device 100 simultaneously generates the acceleration of the first direction 401.

Method 1005 shown in Fig. 6 for calculator 350 to receive the acceleration signal 603 and trigger signal 601. In the preferred embodiment, the calculator 350 is executed in the processor 180 in the electronic device 100.

Method 1007 shown in Fig. 6 for determining whether the moving state of the electronic device 100 is turning or not according to the trigger signal 601 and acceleration signal 603. With reference to 3a, although the electronic device 100 may generate an acceleration in the third direction 403, the calculator 350 can determine the moving state of the electronic device is turning while the difference of the acceleration of the first direction 401 and the acceleration of the third direction 403 is larger than the first value.

Method 1009 shown in Fig. 6, when the moving state of the electronic device 100 is turning, the calculator 350 generates a switching signal.

Method 1011 includes according to the switching signal 605 inducing the electronic device 100 from executing the first operation 810 switching to the second operation 820, wherein the second operation 820 is displayed on the screen with the more obvious display. In the preferred embodiment shown in Fig. 6, the first operation 810 and the second operation 820 can be executed in different window operating systems of the processor in the electronic device 100.

Although the preferred embodiments of the present invention have been described herein, the above description is merely illustrative. Further modification of the invention herein disclosed will occur to those skilled in the respective arts and all such modifications are deemed to be within the scope of the invention as defined by the appended claims.

## Claims

1. A sensing module, disposing in an electronic device, comprising:
a sensor sensing the acceleration of a moving state of the electronic device to generate an acceleration signal;
a starter generating a trigger signal; and
a calculator receiving the acceleration signal and the trigger signal and determining whether the electronic device is turning or not according to the trigger signal and the acceleration signal, wherein the calculator generates a switching signal while the movement of the electronic device is turning, the switching signal induces the electronic device from a first operation switching to a second operation.

2. The sensing module of Claim 1, wherein the sensor is a acceleration sensing chip capable of sensing an acceleration of a first direction, an acceleration of a second direction, and an acceleration of a third direction, the accelerations of these directions are perpendicular to each other.

3. The sensing module of Claim 1, wherein the sensor includes a first acceleration sensor of the first direction, a second acceleration sensor of the second direction and a third acceleration sensor of the third direction, the first direction, the second direction and the third direction are perpendicular to each other.

4. The sensing module of Claim 2 or 3, wherein the calculator determines the moving state of the electronic device is turning when a difference between the acceleration of the first direction and the acceleration of the third direction is larger than a first value.

5. The sensing module of Claim 1 or 4, wherein the starter is selected from a button starter, a thermo-sensing starter or an inductance starter.

6. An electronic device comprising:
a body, wherein the body has an executing first operation and a standby second operation;
a screen disposing on the body, wherein the first operation is exhibited as a more obvious display on the screen, the second operation is exhibited as a more obscure display on the screen;
a sensor disposing on the body for sensing the acceleration of a moving state of the electronic device to generate a acceleration signal;
a starter disposing on the body for generating a trigger signal; and
a calculator disposing on the body, wherein the calculator is capable of receiving the acceleration signal and the trigger signal and determining whether the electronic device is turning or not according to the trigger signal and the acceleration signal, the calculator generates a switching signal while the movement of the electronic device is turning, the switching signal induces the electronic device from a first operation switching to a second operation, the second operation is exhibited as the more obvious display on the screen.

7. The electronic device of Claim 6, wherein the sensor includes an acceleration sensing chip capable of sensing the acceleration of the first direction, the acceleration of the second direction and the acceleration of the third direction, the acceleration of these directions are perpendicular to each other.

8. The electronic device of Claim 6, wherein the sensor includes a first acceleration sensor of the first direction, a second acceleration sensor of the second direction and a third acceleration sensor of the third direction, the first direction, the second direction and the third direction are perpendicular to each other.

9. The electronic device of Claim 7 or 8, wherein the calculator determines the moving state of the electronic device is turning when a difference between the acceleration of the first direction and the acceleration of the third direction is larger than a first value.

10. The electronic device of Claim 6 or 9, wherein the starter is selected from a button starter, a thermo-sensing starter or an inductance starter.

11. The electronic device of Claim 6, 9 or 10, wherein the more obvious display is displayed on the screen with upper layer, anterior arrangement, greater brightness or larger size to users corresponding to the more obscure display.
